# EUROPEAN PATENT APPLICATION

(11) **EP 2 565 791 A1**
(43) Date of publication of application: **06.03.2013**
(21) Application number: 11775042.2
(22) Date of filing: 27.04.2011
(51) Int. Cl.: G06F 12/00, G06F 3/06, G06F 13/10, G06F 17/30

(54) **STORAGE SYSTEM, CONTROL METHOD FOR STORAGE SYSTEM, AND COMPUTER PROGRAM**

(30) Priority: 28.04.2010 JP 2010103859
(71) Applicant: NEC Corporation, Tokyo 108-8001 (JP)
(72) Inventor: TORII Takashi, Tokyo 108-8001 (JP)
(74) Representative: Robson, Aidan John
(86) International application number: PCT/JP2011/060238
(87) International publication number: WO 2011/136261

(57) **Abstract**

A control method for a storage system, whereby a plurality of storage nodes included in the storage system are grouped into a first group composed of storage nodes with a network distance in the storage system within a predetermined distance range, and second groups composed of storage nodes that share position information for the storage nodes that store data. A logical spatial identifier that identifies the second groups is allocated for each of the second groups, to calculate a logical spatial position using a data identifier as an input value for a distributed function, and store data corresponding to the data identifier in the storage node that belongs the second group to which the identifier corresponding to the calculated position is allocated.

## Description

### TECHNICAL FIELD

The present invention relates to a storage system that holds a large amount of data, a control method for a storage system, and a computer program.
Priority is claimed on Japanese Patent Application No. 2010-103859, filed April 28, 2010, the contents of which are incorporated herein by reference.

### BACKGROUND ART

Accompanying the increase in the amount of data provided on the Internet, storage that holds a large amount of data is needed. For example, businesses that provide web search engines employ a distributed storage technique in which a plurality of servers is arranged in parallel. This distributed storage technique is a technique that distributes and arranges data over several thousand nodes (also referred to as "peers"), and configures a single large storage as a whole. Furthermore, the distributed storage technique does not involve expensive storage-dedicated devices, and is a technique that is receiving attention in the enterprise and carrier business fields, where the amount of data handled is increasing, as a technique that is able to realize large-capacity storage by arranging a plurality of comparatively inexpensive servers. In the portion of the business fields in which data of a large capacity exceeding a petabyte (10¹⁵) is stored, the capacity of storage-dedicated devices in which data can be stored becomes a bottleneck. Therefore, there are beginning to be cases where the only solution is to utilize the distributed storage technique as the method for realizing large-capacity data storage.

However, in the distributed storage technique, the data is distributed over a plurality of nodes. Therefore, it is necessary for a client attempting to access the data, to firstly find the position of the node that holds the data. Consequently, in the distributed storage technique that is receiving attention in recent years, the method for finding the position of the node holding the data is a technical issue.

As one method for finding the position of the node holding the data, there is the metaserver method in which there is provided a metaserver that manages the position information of the data. In this metaserver method, together with the configuration of the storage system becoming large scale, the performance of the metaserver that detects the position of the node storing the data can become a bottleneck.

Consequently, as another method for finding the position of the node holding the data, a method that obtains the position of the data using a distribution function (a hash function for example) is receiving attention. This uses the technique of distributed hash tables (DHT), which have been previously used in the field of P2P (peer-to-peer) networks, and is referred to as key-value storage (KVS). This KVS makes the identifier for accessing the data the key, and the data the value, and by applying the key to the distribution function, that is to say, by making the key the input value of the distribution function, the position of the node storing the data (hereunder referred to as the "data-storing node") is arithmetically determined.

The difference between the KVS and the metaserver methods is, in contrast to the metaserver method needing to hold all of the position information of the data, in KVS, only the distribution function and the node list need to be shared in all of the clients. Therefore the cost at the time of sharing the distribution function and the node list is small, and there is no performance related bottleneck. If KVS is used, there is no bottleneck in the manner of the metaserver method resulting from the performance of the metaserver, and even in a case where the storage system becomes large scale, large-capacity storage with performance scalability can be realized (refer to Patent Documents 1 to 3).

Patent Document 1: Japanese Unexamined Patent Application, First Publication No. 2009-289161.
Patent Document 2: Japanese Unexamined Patent Application, First Publication No. 2009-151403.
Patent Document 3: Japanese Unexamined Patent Application, First Publication No. 2008-269141.

### DISCLOSURE OF INVENTION

In the existing KVS technique, the data-storing node is arithmetically determined using a hash function (or a similar distribution function thereto) as the distribution function. Furthermore, in the DHT technique, overlay routing is performed by routing of the distribution hash table. Therefore, in storage systems using the existing KVS technique, generally the following two main points are observed for example.

Firstly, the first point is the point that in the existing KVS technique, the degree of freedom of the arrangement of the data is not considered to be high. Since the KVS technique is utilized in large-scale storage systems, the storages are inevitably arranged by being distributed over a large-scale network. Then, a case where the distance on the network between the node (client) that accesses the data, and the data-storing node that holds the data becomes far, is possible. If the delays between the client and the data-storing node are large, the processing speed of the storage system also becomes slow. Therefore, improvements to the processing speed of the storage system, by means of arranging the client and the data-storing node as close as possible, are required. Consequently, it is required to be able to freely change the data arrangement.
Furthermore, rather than distributively holding the data, and conversely collecting the data at predetermined data-storing nodes and creating empty data-storing nodes, the realization of energy savings of the storage system can be considered. If the data arrangement can also be freely changed at such a time, control by an energy-saving mode of the storage system also becomes possible. However, in the existing KVS technique, the data-storing nodes are determined by a hash function. Therefore for example, even if there is an attempt to arrange some data at a specific data-storing node, there is a possibility that the data arrangement cannot be freely controlled.

Furthermore, the second point is the point that since the overlay routing of the distribution hash table is not linked to the actual network topology, routing is performed that is not efficient, and as a result, there are cases where it is not of a high performance. As an extreme example, a case such as going to Osaka from Tokyo via the United States is possible.

Conventionally, in scalable storage systems, a control method for a storage system that is able to improve the degree of freedom of the data arrangement has been needed.

The present invention may have for example the following aspects. However, the present invention is in no way limited by the following description.
A first aspect is a control method for a storage system wherein, with respect to a control method for a storage system configured by a plurality of storage nodes that store data, the plurality of storage nodes included in the storage system are grouped into a first group composed of storage nodes with a network distance in the storage system within a predetermined distance range, and second groups composed of storage nodes that share position information for the storage nodes that store data. A logical spatial identifier that identifies the second groups is allocated for each of the second groups, to calculate the logical spatial position using a data identifier as an input value for a distribution function, and store data corresponding to the data identifier in the storage node that belongs to the second group to which the identifier corresponding to the calculated position is allocated.

Furthemore, the plurality of storage nodes respectively always belong to one or more first groups, and one or more second groups, and a list of all of the other storage nodes within the second group to which the storage node belongs, and a list of all of the other storage nodes within the first group to which the storage node belongs, may be stored.

Moreover, the storage node within the storage system to which a data access request is made may calculate the logical spatial position using the data identifier as the input value of the distribution function, and select the second group for which the identifier corresponding to the calculated position is allocated, and from the node list stored in the storage node, search for an additional storage node within the first group to which the storage node belongs, that belongs to the selected second group, and output a data access request to the searched additional storage node.

The storage node within the storage system that receives the data access request may, in a case where the data for which the access request is received is stored within the storage node, output the requested data to the storage node requesting the data, or in a case where the data for which the access request is received is not stored within the storage node, search for from the node list stored in the storage node, an additional storage node within the second group to which the storage node belongs wherein the requested data is stored, and transfer the data access request to the searched additional storage node.

Furthermore, the storage node within the storage system that receives the data access request may, in a case where the data for which the access request is received is stored within the storage node, output the requested data to the storage node requesting the data, or in a case where the data for which the access request is received is not stored within the storage node, search for from the node list stored in the storage node, an additional storage node within the second group to which the storage node belongs wherein the requested data is stored, and report the searched additional storage node to the storage node making the access request.

According to the aforementioned aspect, for example in a scalable storage system, an effect can be achieved in which the degree of freedom of the data arrangement can be improved.

### BRIEF DESCRIPTION OF THE DRAWINGS

FIG. 1 is a block diagram showing a schematic configuration of a storage system according to an embodiment.
FIG. 2 is a diagram that describes an existing KVS technique for a conventional storage system.
FIG. 3 is a diagram showing an example of a logical node configuration of the storage system of the embodiment.
FIG. 4 is a diagram that describes a KVS technique for a storage system of the embodiment.
FIG. 5 is a diagram showing an example of a physical configuration of the storage system of the embodiment.
FIG. 6 is a sequence diagram showing the flow of a data access processing in the storage system of the embodiment.

### BEST MODE FOR CARRYING OUT THE INVENTION

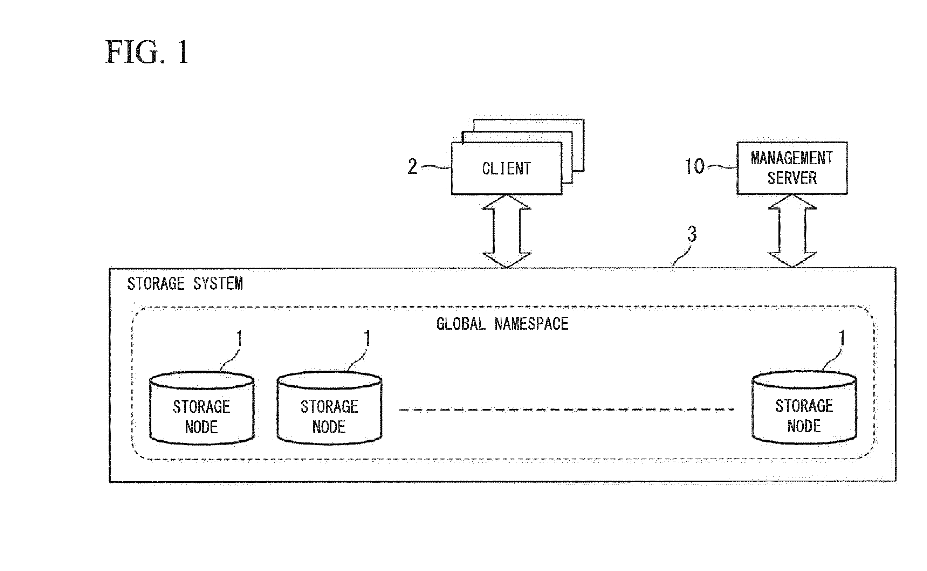

Hereunder, an embodiment is described with reference to the drawings. FIG. 1 is a block diagram showing a schematic configuration of a storage system according to the present embodiment. In FIG. 1, the storage system 3 is furnished with a plurality of storage nodes 1 which are data-storing nodes. The storage nodes 1 are assigned with one or a plurality of IDs. Moreover this plurality of storage nodes 1 is mapped within the storage system 3 by a management server 10, and is configured as a single global namespace. The physical positions in which the storage nodes I are installed within the storage system 3 are not a single location, and the storage nodes 1 installed in a plurality of locations are connected for example by means of a network to thereby configure a single global namespace.

A client 2 is a node that accesses the data of the storage system 3. The client 2 accesses the storage system 3, assuming it to be a single large storage.

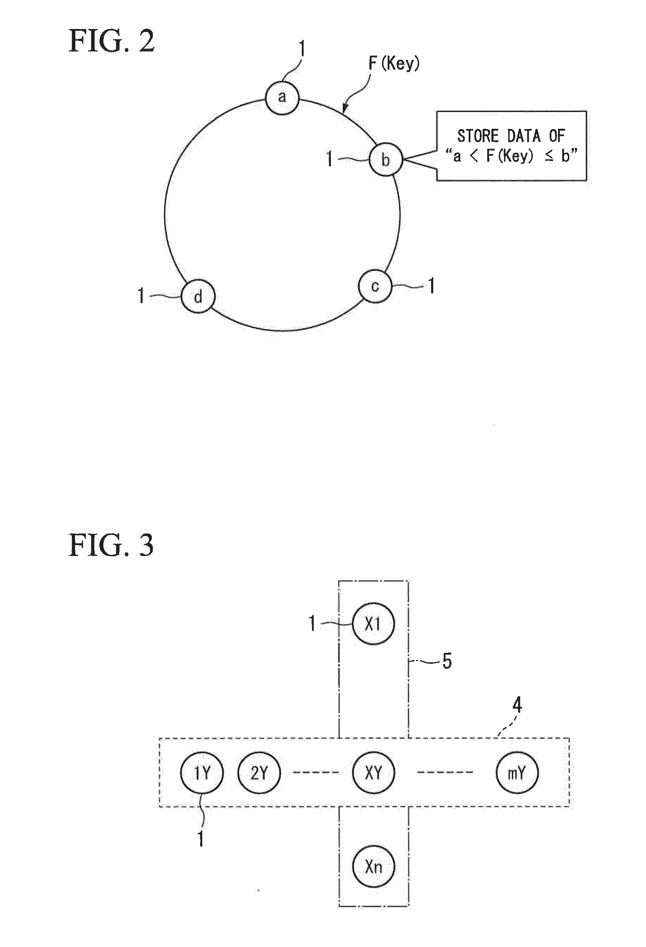

Here, the existing KVS technique is described. FIG. 2 is a diagram describing the existing KVS technique for a conventional storage system. In FIG. 2, a case is shown where data-storing nodes respectively assigned with IDs "a", "b", "c", and "d", are mapped on a circumference in logical space. In the existing KVS technique, the Key which is a data identifier, is applied to the distribution function F to obtain an F(Key). Then, on this circumference, the data corresponding to the F(Key) is stored in the data-storing node holding the closest ID in the clockwise direction from the position of the F(Key). In FIG. 2, it is shown that data corresponding to the F(Key) which satisfies a < F(Key) ≤ b is stored in a data-storing node assigned with an ID of "b".

In this method of data storage according to the existing KVS technique, the clients only share the distribution function F and the list of data-storing nodes. Therefore it has the advantage that less information is required to be shared by the clients. However, the Key, which is a data identifier, cannot be changed once it has been assigned to the data. Therefore the data cannot be moved to an arbitrary data-storing node, and there is no degree of freedom of the data arrangement.

Next, the method of data storage in the storage system 3 of the present embodiment is described. FIG. 3 is a diagram showing an example of a logical node configuration in the storage system 3 of the present embodiment. As shown in FIG. 3, in the storage system 3 of the present embodiment, the storage nodes 1 within the storage system 3 are grouped into two types of groups referred to as a storage group 4 and a network group 5. This grouping of the storage nodes 1 within the storage system 3 is performed by the management server 10.

The storage group 4 is a group configured by storage nodes 1 that share position information of the storage nodes 1 that are storing data based on the KVS technique used in the storage system 3.

Furthermore, the network group 5 is a group determined by the management server 10 based on the network distance in the storage system 3, and is a group configured by comparatively close storage nodes 1 in which the network distance is within a predetermined distance range. That is to say, the network distance between two arbitrary storage nodes 1 belonging to the network group 5 becomes a distance within the predetermined distance range.

The storage nodes 1 in the storage system 3, concurrently with belonging to one of the storage groups 4 managed by the management server 10, belong to one of the network groups 5.

The open circles in FIG. 3 indicate the storage nodes 1, and within the circles representing the storage nodes I are displayed the identifying number in the storage group 4 and the identifying number in the network group 5. More specifically, among the two-digit reference symbols within the circles representing the storage nodes 1, the reference symbol on the left side represents the identifying number (1, 2,..., X,..., m) of the storage nodes 1 within a single storage group 4 (in FIG. 3, the storage group 4 is assigned the reference symbol "Y"), and the reference symbol on the right side represents the identifying number (1, 2,..., Y,..., n) of the storage nodes I within a single network group 5 (in FIG. 3, the network group 5 is assigned the reference symbol "X").

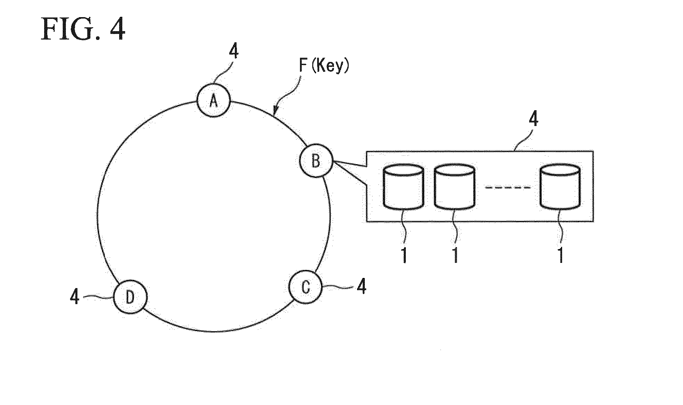

Next, the KVS technique for the storage system 3 of the present embodiment is described. FIG. 4 is a diagram that describes the KVS technique for the storage system 3 of the present embodiment. As shown in FIG. 4, in the KVS technique in the storage system 3 of the present embodiment, the degree of freedom of the data arrangement can be increased by grouping the plurality of storage nodes 1. Moreover, in the storage system 3, a single or a plurality of IDs are assigned to the storage groups 4 by the management server 10, and the storage groups 4 assigned with IDs are mapped within the storage system 3. In FIG. 4, a case is shown in which the storage groups 4 respectively assigned with the IDs "A", "B", "C" and, "D" are, in the same manner as the existing KVS technique shown in FIG. 2, mapped on a circumference in logical space.

Furthermore, in the KVS technique in the storage system 3 of the present embodiment, in the same manner as the existing KVS technique shown in FIG. 2, the Key, which is a data identifier, is applied to the distribution function F to obtain the F(Key). Then, on this circumference, the storage group 4 holding the closest ID in the clockwise direction from the position of the F(Key) is determined as the storage group 4 to hold the data. Subsequently it is determined which storage node 1 within the determined storage group 4 is to hold the data, and the data corresponding to the F(Key) is held in the determined storage node 1.

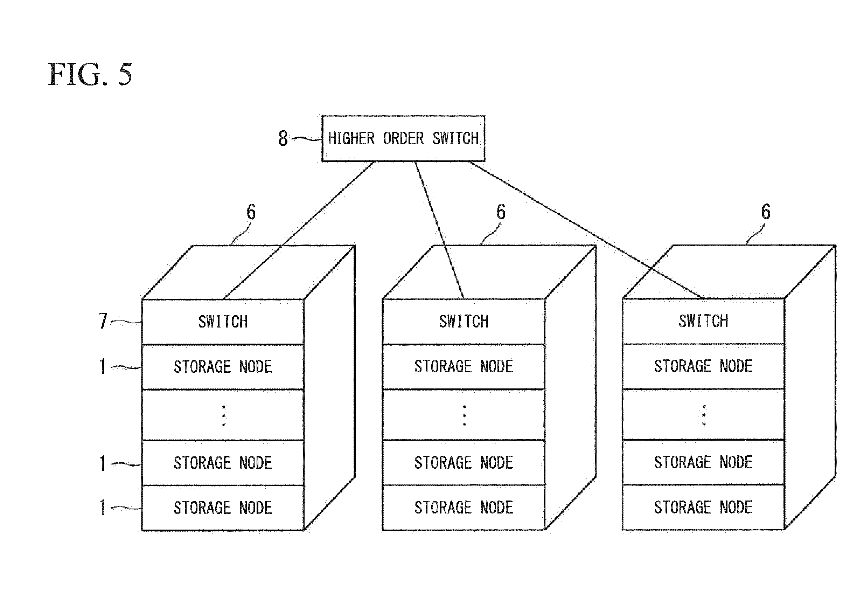

Next, the network groups 5 in the storage system 3 of the present embodiment are described. FIG. 5 is a diagram showing an example of a physical configuration of the storage system 3 of the present embodiment. As mentioned above, the network groups 5 are such that storage nodes 1 with a comparatively close network distance are grouped. This network distance can be considered to be for example the number of switching stages on the network path. More specifically, as shown in FIG. 5, a storage system 3 comprising a plurality of racks 6 which are configured by a plurality of storage nodes 1 and a switch 7, and higher order switches 8 that bundle the respective racks 6, is assumed. In this case, the racks 6 correspond to the respective network groups 5.

The storage nodes I in the storage system 3, as mentioned above, concurrently with always belonging to one or more network groups 5, always belong to one or more storage groups 4. Furthermore, the storage groups 4 to which the storage nodes 1 belong are allocated by the management server 10 such that it is possible to trace from the storage node 1 which belongs within the network group 5, to all of the storage groups 4 in the storage system 3. In other words, the storage groups 4 of the storage nodes 1 are allocated such that if the union of all of the storage nodes 1 within the network group 5 to which a given single storage node 1 belongs is taken, all of the storage groups 4 can be covered.

The number of storage nodes 1 belonging to the storage groups 4 and the network groups 5 may be a number that differs in the respective storage groups 4 and network groups 5. For example, for a single storage node 1, the storage group 4 and the network group 5 of this storage node 1 can also be allocated such that it belongs to a plurality of storage groups 4 and network groups 5.

The storage nodes 1 store as a node list, a list of all of the other storage nodes 1 within the storage group 4, and a list of all of the other storage nodes 1 within the network group 5, to which the storage node 1 itself belongs. The respective node lists include; the ID of the storage group 4 and the network group 5 to which the storage node 1 belongs, the address (position) information, of the storage node 1, and information of the data (for example a summary of the data) that the storage nodes 1 are storing.

Next, the number of node lists stored by the storage nodes 1 in the storage system 3 of the present embodiment is described. As mentioned above, all of the storage nodes 1 store in the memory of the storage node 1 itself, a list of all of the storage nodes 1 within the network group 5 to which the storage node 1 itself belongs, and a list of all of the storage nodes 1 within the storage group 4 to which the storage node 1 itself belongs. In the storage system 3, the total number of lists of storage nodes 1 that the storage nodes 1 are storing is a very small number compared to conventional storage systems. Therefore it is possible to realize a reduction in the memory capacity within the storage system, and a reduction in maintenance costs.

More specifically, for example a storage system configured by 1000 storage nodes is considered. In a case where the node lists of all of the storage nodes is stored in a conventional storage system, there is a need for the storage nodes to store 1000 lists as node lists.

In contrast, in the storage system 3 of the present embodiment, only the list of the number of all of the storage nodes 1 within the network group 5 to which the storage node 1 itself belongs, and the list of the number of all of the storage nodes 1 within the storage group 4 to which the storage node 1 itself belongs, are stored as node lists. For example a case is assumed where for example 1000 storage nodes 1 are grouped into N groups of storage groups 4 and M groups of network groups 5, wherein the storage nodes 1 respectively belong to a single storage group 4 and a single network group 5. In this case, the storage nodes 1 only store a list for the N storage nodes 1 within the network group 5 and a list for the M storage nodes 1 within the storage group 4, to which the storage node 1 itself belongs. Therefore the node lists stored by the storage nodes 1 become e N+M-1 lists. Here, the reason for the -1 is that, as can also be understood from FIG. 3, the lists of the storage node 1 itself are duplicated between the storage group 4 and the network group 5, and this is to avoid such duplication. More specifically, in a case where there are 100 groups of storage groups 4, and 10 groups of network groups 5, the storage nodes 1 store just 100 + 10 - 1 = 109 lists.

Here, compared to the storage nodes 1 storing 1000 lists in the conventional storage system, the number of lists stored by the storage nodes 1 of the storage system 3 of the present embodiment is a number that is approximately one-tenth, and a reduction in the memory capacity utilized by the storage of the node lists within the storage nodes 1 becomes realized.

Furthermore, generally in storage systems, alive monitoring of the storage system is periodically performed in order to reduce the time in which the data cannot be accessed as much as possible. In this alive monitoring of the storage system, there is a need to detect errors in the storage nodes within the storage system as early as possible, and this is performed by checking the working condition of whether or not the storage nodes included in the node list are working normally. If there is a case where the storage system is not working normally due to a cause such as an error occurring in one of the storage nodes within the storage system, or the network of the storage system being interrupted, it becomes necessary to change the node list. Since the cost of checking this working condition becomes proportionally larger with the number of lists included in the node list, when the number of lists becomes large, it becomes a cause of greatly losing the scalability of the storage system as a whole. Consequently, keeping the number of lists included in the node list small is an important point for a scalable storage system. In the storage system 3 of the present embodiment, since the number of lists of storage nodes 1 stored in the node list of the storage nodes 1 is small, a reduction in maintenance costs can be realized.

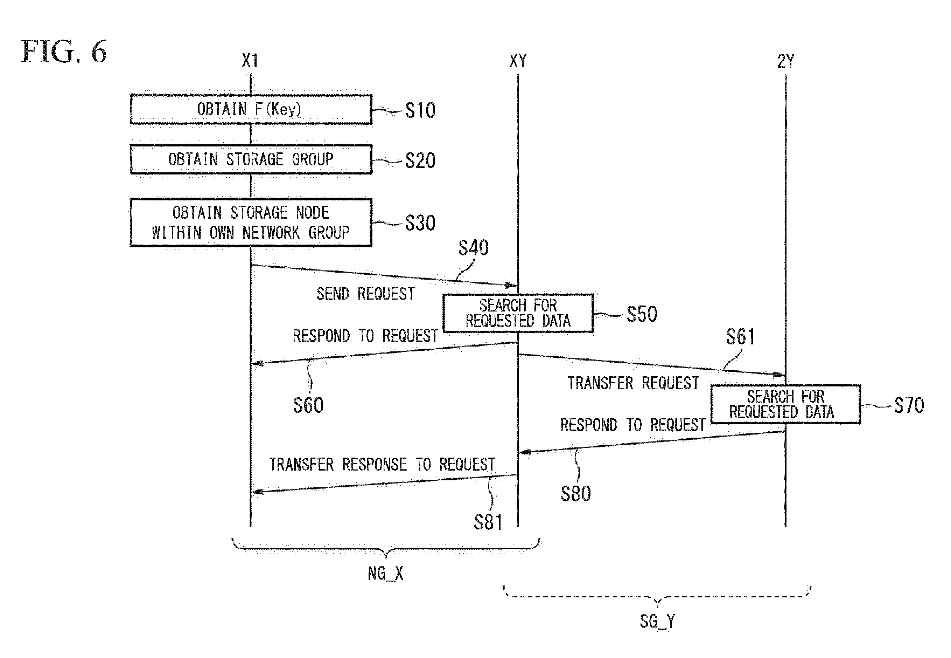

Next, the searching method of the storage nodes 1 within the storage system 3 of the present embodiment for a storage node 1 holding the data is described. FIG. 6 is a sequence diagram showing the flow of data access processing in the storage system 3 of the present embodiment. In FIG. 6, a case is described where the storage node I (hereunder referred to as "storage node X1") assigned the identifying number "1" belonging to the network group 5 (hereunder referred to as "network group NG_X") shown in FIG. 3, which is assigned the reference symbol "X", becomes the client 2 and accesses the data.

Firstly, the storage node X1 applies the data identifier (Key) to the distribution function F to obtain the F(Key) (step S10). Then, the storage group 4 (hereunder referred to as "storage group SG_Y") to which the storage node 1 holding the data corresponding to the F(Key) belongs is obtained (step S20). For example, if "A" and "B" are made the IDs of the storage groups 4, the storage group 4 assigned "B" as the ID, such that it satisfies A < F(Key) ≤ B, is requested (refer to FIG. 4).

Then, within the network group NG_X to which the storage node X1 itself belongs, a storage node 1 belonging to the storage group SG_Y is obtained from the node list (step S30). In FIG. 6, the storage node XY (refer to FIG. 3) within the network group NG_X and which belongs to the storage group SG_Y has been obtained. Then, the storage node X1 sends a data request to the storage node XY (step S40).

Subsequently, the storage node XY that receives the request searches whether or not the requested data is data that is held by the storage node XY itself (step S50). In a case where the requested data is data that is held by the storage node XY itself, the storage node XY responds to the request from the storage node XI, and sends the requested data to the storage node X1 (step S60). Then, the data access by the storage node X1 is completed by the storage node X1 receiving the data sent from the storage node XY.

Furthermore, in step S50, in a case where the requested data is not data that is held by the storage node XY itself, the storage node XY judges that the requested data is distributed to another storage node 1 within the storage group SG_Y to which the storage node XY itself belongs. Then, the storage node XY obtains the other storage nodes 1 within the storage group SG_Y that are storing the requested data from the node list, and transfers the request from the storage node X1 to another storage node 1 within the storage group SG_Y (step S61). In FIG. 6, a case is shown where the request is transferred to the storage node 2Y (refer to FIG. 3) belonging to the storage group SG_Y.
The method in which the storage node XY transfers the request to another storage node 1 within the storage group 4 depends on the data distribution method within the storage group 4.
This data distribution method is described below.

The storage node 2Y to which the request is transferred, searches for the requested data from the data held by the storage node 2Y itself (step S70). Then, the storage node 2Y responds to the request from the storage node X1 that has been transferred from the storage node XY, and sends the requested data to the storage node XY (step S80). The storage node XY then transfers the response to the request from the storage node 2Y, and the data to the storage node X1 within the same network group NG_X (step S81). Then, the data access by the storage node X1 is completed by the storage node X1 receiving the data transferred from the storage node XY.

In the description of FIG. 6, in step S50, an example is described in which, in a case where the storage node 1 receiving the request does not hold the requested data, the request is transferred to the storage node 1 storing the requested data. However this can also be a method in which another storage node 1 is notified to the storage node 1 that is the request source, without the storage node 1 transferring the request to another storage node 1. More specifically, firstly, in step S50, the storage node XY obtains the storage node 2Y, which is another storage node I within the storage group SG_Y that is storing the data requested from the node list. Then, in step S60, instead of the storage node XY sending the requested data to the storage node X1, it notifies that the requested data is stored in the storage node 2Y within the storage group SG_Y. Then, the storage node X1 directly sends (resends) the data request to the storage node 2Y that was notified, and receives the requested data sent from the storage node 2Y.
In this manner, the storage node X1 is able to directly receive the data sent from the storage node 2Y by resending the request to the storage node 2Y.

Next, two methods for the data distribution method within a storage group 4 in the storage system 3 of the present embodiment are described. Firstly, the first method is a centralized metaserver method in which a single storage node 1 (hereunder referred to as a "metaserver") that manages all of the data arrangement within the storage group 4 is determined, and all of the data arrangement within the storage group 4 is centrally managed by the metaserver thereof. Since this centralized metaserver method centrally manages the data arrangement, the movement of data and management of duplication is simple.

In this centralized metaserver method, a query is always performed with respect to the metaserver at the time the client 2 accesses the data within the storage system 3. However, in the storage system 3, since the frequency of moving the data is not very high, then for example there is a possibility that the data accessed from the client 2 is concentrated (has a localization) on specific data. In this case, the storage nodes 1 temporarily store (cache) the position information of the accessed data within the storage node 1 itself in cache memory for example. As a result, the data within the storage system 3 can be accessed without performing a query with respect to the metaserver.

At the time the data within the storage system 3 is accessed, in a case where a query is performed with respect to the metaserver, there is a possibility of the performance of the metaserver becoming a bottleneck. Furthermore, in a case where the configuration of the storage system 3 is a large scale, the storage groups 4 within the storage system 3 are distributed over the network. Therefore, there is a possibility for network traffic becoming increased. Even in this case, by combining the functionality of a cache in the storage nodes 1, there is a high probability that the deficiencies mentioned above can be resolved.

Moreover, the second method of the data distribution method within a storage group 4 in the storage system 3 of the present embodiment is, in the same manner as the data arrangement between the storage groups 4, a hash method that determiners the storage node 1 by a distribution function. In this hash method, the storage node 1 is obtained from the hash value based on a hash table in which hash value ranges and corresponding storage nodes 1 are paired. This method is the same as conventional methods using a hash table. However, the storage system 3 of the present embodiment differs in that, in order to increase the degree of freedom of the data arrangement, the hash value ranges are divided into finer units (hash values that become the smallest).

For example, when data is moved to a different storage node 1, by changing the storage node 1 corresponding to the hash value of the data to be moved within the hash table, the data can be moved to a different storage node 1. This movement method of the data is the same as the movement of data using a conventional hash table. However, in conventional hash tables, the hash value ranges are not divided. Therefore there is a need to move all of the data included in the hash value range at the time the movement of data is performed, and there are cases where the cost of moving the data is too high. In contrast, in the storage system 3 of the present embodiment, since the hash value ranges are divided into fine units, it is possible for only the data included in the divided hash value range to be moved, and it is not necessary to move all of the data, such as when data is moved using a conventional hash table.

In the storage system 3 of the present embodiment, although the amount of data that is moved can be made smaller by dividing the hash value ranges into fine units, the hash table becomes large due to the division of the hash value ranges. However, by providing an upper limit to the size of the hash table, and by merging hash ranges with few accesses, with adjacent hash ranges when the size of the hash table reaches the upper limit, the size of the hash table can be made small (compressed).

Next, an example of a case where data is moved in the storage system 3 of the present embodiment is described. The movement of data is performed between storage nodes 1 within the same storage group 4. For example, in the example of the node configuration shown in FIG. 3, data is moved from the storage node 1 (1Y) belonging to the storage group 4 assigned with the reference symbol "Y" and assigned the identifying number "1", to one of the storage nodes 1 up to the storage node 1 (mY) assigned with "m". In this manner, in the storage system 3 of the present embodiment, data can be moved to one of the storage nodes 1 within the same storage group 4.

As mentioned above, in the storage system 3 according to the present embodiment, the degree of freedom of the data arrangement can be improved by moving the data between the storage nodes 1 within the same storage group 4. Furthermore, as the reason for performing changes in the data arrangement, a large network distance between the client 2 that accesses the data in the storage system 3, and the storage node 1 holding the data to be accessed can be considered. However, in the storage system 3 according to the present embodiment, the network groups 5 are set in response to the network topology. Therefore it is always possible for the client 2 and the network groups 5 to find the same storage node within the storage group 4. In this manner, if there is a degree of freedom in that the data can be moved within the storage group 4, the efficiency of the storage system 3 can be sufficiently improved. Moreover, as a result of the improvement in the degree of freedom of the data arrangement, control by an energy-saving mode also becomes possible, and energy savings of the storage system 3 can also be realized.

The degree of freedom of the data arrangement becomes maximized if the data can be moved to arbitrary storage nodes within the storage system. However, in that case there is a need for all of the storage nodes within the storage system to grasp that the data arrangement has been changed. However, the cost for all of the storage nodes to grasp the change in the data arrangement increases with the configuration of the storage system becoming a large scale, and as a result, it becomes a cause of greatly losing the scalability of the storage system as a whole. In contrast, in the control method of the storage system 3 of the present embodiment, it is acceptable if only the storage nodes 1 within the storage group 4 in which the data arrangement is changed, grasp the change in the data arrangement. Moreover, for the storage nodes 1 within the other storage groups 4 in which the data arrangement has not been changed, it is not necessary to grasp the changes in the data arrangement, even if it is the storage group 4 in which the data arrangement was changed, since it is not changed as a storage group. Consequently the cost for grasping the change in the data arrangement can be kept small, and as a result, the scalability of the storage system as a whole is improved. Furthermore, this sufficiently achieves the object of making the network distance near between the client 2 that accesses the data of the storage system 3 and the storage node 1 holding the data to be accessed.

In the control method for a storage system according to the aforementioned embodiment, in a scalable storage system, the storage nodes are grouped into orthogonal groups referred to as storage groups and network groups. In the storage groups, the degree of freedom of the data arrangement can be improved by performing the data arrangement with consideration of the network topology. As a result, a flexible data arrangement can be achieved. Therefore for example the efficiency of the storage system can be improved by closely arranging the processing nodes and the data. Furthermore, in the control method for a storage system of the aforementioned embodiment, in order to improve the degree of freedom of the data arrangement, for example the data is collected in predetermined storage nodes. As a result it becomes possible to perform control for energy savings that realizes a low energy consumption of the storage system, and to improve the access speed by preventing unnecessary traffic.

The foregoing has described an embodiment with reference to the drawings. However, the specific configuration is in no way limited by this embodiment, and various modifications are also included.

The storage nodes 1 in the embodiment may also have a CPU (central processing unit), a memory, a hard disk, a network interface, or the like. The storage nodes 1 may also be a generally widely used server computer, personal computer, or the like. Furthermore, the embodiment may also be implemented with software or hardware.

### INDUSTRIAL APPLICABILITY

The aforementioned embodiment is applicable for example to a storage system holding a large amount of data.

### DESCRIPTION OF THE REFERENCE SYMBOLS

- 1: Storage node
- 2: Client
- 3: Storage system
- 4: Storage group
- 5: Network group
- 6: Rack
- 7: Switch
- 8: Higher order switch
- 10: Management server

## Claims

1. A storage system comprising a plurality of storage nodes, wherein
the storage nodes comprise:
a first memory that stores data; and
a second memory that stores node information related to both a network group composed of the storage nodes in which a network distance is within a predetermined range and a storage group based on data identifying information corresponding to the data, and
the storage nodes reference the node information and perform access processing of the data, when an access request for the data is received.

2. A storage system according to claim 1, wherein the storage nodes store in the node information, information for all of the storage nodes within the network group to which the storage nodes belong, and information for all of the storage nodes within the storage group to which the storage nodes belong.

3. A control method of a storage system including a plurality of storage nodes that store data, the method comprising:
a step of, when an access request for the data is received, referencing node information related to both a network group composed of the storage nodes in which a network distance is within a predetermined range and a storage group based on data identifying information corresponding to the data; and
a step of performing access processing of the data, based on the node information.

4. A control method of a storage system according to claim 3, further comprising:
a step of, in the storage node that has received the access request, determining the storage group based on the data identifying information;
a step of referencing the node information, and detecting the storage node that belongs to the storage group that is determined to be within the network group to which the storage group that received the access request belongs;
a step of requesting access to the data in the detected storage node; and
a step of responding to the access request based on a response from the detected storage node.

5. A control method for a storage system according to claim 4, further comprising:
a step of, in a case where, in the detected storage node, data corresponding to the access request is being stored in the detected storage node, sending data corresponding to the access request to the storage node that has received the access request; and
a step of, in a case where, in the detected storage node, data corresponding to the access request is not being stored in the detected storage node, referencing the node information, and requesting data corresponding to the access request from another of the storage nodes within the storage group to which the detected storage node belongs, and sending data corresponding to the access request to the storage node that has received the access request.

6. A control method for a storage system according to claim 4, further comprising:
a step of, in a case where, in the detected storage node, data corresponding to the access request is being stored in the detected storage node, sending data corresponding to the access request to the storage node that has received the access request; and
a step of, in a case where, in the detected storage node, data corresponding to the access request is not being stored in the detected storage node, referencing the node information, and searching for an additional storage node that is storing data corresponding to the access request within the storage group to which the detected storage node belongs, and notifying the searched storage node to the storage node that has received the access request.

7. A computer program stored in a non-transitory computer readable storage medium, for respective storage nodes in a storage system including a plurality of storage nodes that store data, the program comprising;
an instruction of, when an access request for the data is received, referencing node information related to; a network group composed of the storage nodes in which a network distance is within a predetermined range, and a storage group based on data identifying information corresponding to the data, and
an instruction of performing access processing of the data, based on the node information.
